Europäisches Patentamt

European Patent Office

Office européen des brevets

(19)

(11) Publication number: **0 340 640**

**A1**

(12)

# EUROPEAN PATENT APPLICATION

(21) Application number: **89107652.3**

(22) Date of filing: **27.04.89**

(51) Int. Cl.⁴: **B41M 1/30 , B29D 12/02**

(30) Priority: **03.05.88 IT 8254488**

(43) Date of publication of application:
**08.11.89 Bulletin 89/45**

(84) Designated Contracting States:
**AT DE FR GB**

(71) Applicant: **Fedon, Onorato**
**Via dell'Occhiale 42**
**I-32040 Vallesella di Cadore (BL)(IT)**

Applicant: **Fedon, Marco**
**Via Bieggia 1**
**I-32040 Vallesella di Cadore (BL)(IT)**

(72) Inventor: **Fedon, Onorato**
**Via dell'Occhiale 42**
**I-32040 Vallesella di Cadore (BL)(IT)**
Inventor: **Fedon, Marco**
**Via Bieggia 1**
**I-32040 Vallesella di Cadore (BL)(IT)**

(74) Representative: **D'Agostini, Giovanni, Dr.**
**D'AGOSTINI ORGANIZZAZIONE n. 17 via**
**G.Giusti**
**I-33100 Udine(IT)**

(54) **Method for obtaining drawings of various chromatic shades particularly on plastic sheets.**

(57) Method for obtaining drawings in various chromatic shades, particularly on plastic sheets, using a photoengraving procedure to obtain a block, characterized by the fact that it comprises a set of previously separated basic colors, in this particular instance, yellow, red, blue and black, with each color corresponding to a block so as to obtain a stamp to be transferred in logical succession, by a pick-up means, onto a plastic plate and, finally, to be conveniently covered by a layer of protective material.

FIG. 2

EP 0 340 640 A1

# METHOD FOR OBTAINING DRAWINGS IN VARIOUS CHROMATIC SHADES, PARTICULARLY ON PLASTIC SHEETS

The subject of this invention is a method for obtaining drawings in various chromatic shades, in particular on plastic sheets to produce frames for spectacle, preferably earpieces.

The invention has the scope to produce graphic designs in several shades and/or tones on plastic frames or earpieces for glasses, being the utilized plastic material preferably of acetalic type.

Methods which are applied in a similar manner are unknown in the present state of art. Other systems are known, however, to obtain graphic forms on frames for glasses which are principally realized on metallic parts making up the glasses such as, for example, on the sides of the earpieces or in front of the respective frames. These forms can be obtained by means of cold pressing or, alternatively, by the known procedure of serigraphy.

The disclosed solutions involve several inconveniences, for example, application is fairly limited as they do not have the possibility of obtaining a plurality of shades with special effects.

Furthermore, when pressing on very thin plates, problems both of a technical and functional nature occur in the realization of the design.

Costs are also to be considered among the other inconveniences in these procedures as these are fairly high in relation to the standard of quality of the finished product.

The scope of this invention is also to eliminate the abovementioned inconveniences.

This and other scopes are achieved by the present invention, as per the characteristics given in the attached claims, which solves the above problems by a method to obtain graphic forms in various shades of color in particular on plastic plates successively worked to realizes frames and earpieces for glasses, utilizing a photo-engraving procedure to obtain at least one block/cliché for printing in said plastic plate, characterized by the fact that the method includes:
- preparation of the desired design;
- preparation of a number of different cliches for said design, each one corresponding to a pre-established color of a set of colors previously determined (e.g. yellow, red, blue and black = four cliches),
- printing or transfer in logical succession of the respective designs in correspondent different colors by successive overprinting with said cliches over a surface of plastic plate as row material to produce frames and/or earpieces for glasses/spectacles,
- covering the printed plastic plate with a transparent layer of protective material;
- working in the final shapes the layered plastic plate to obtain spectacle-frames and/or spectacle-earpieces.

The advantages obtained by this solution consist essentially in the fact that it is possible to obtain a vast range of designs, also of a complex nature, together with tones which are particularly pleasing and not easy to reproduce, in final pieces as frames and earpieces, with the design well protected against abrasion. It is also possible to produce shadings, which naturally increase the pleasing aspect of the material treated. Lastly, the relatively contained costs of such realizations makes the use of this system particularly convenient in respect to other methods to obtain similar products which are undoubtedly of inferior quality.

These and other advantages appear in the following detailed description of a preferential solution of realization together with the help of the attached drawings, the execution details of which are not to be held as limiting but only as examples.

Fig. 1 gives a schematic prospect of a plastic plate on the respective surface a set of designs has to be printed;

Fig. 2 gives a schematic prospect of the same plate on which a layer of protective material has also been applied after printing the respective designs.

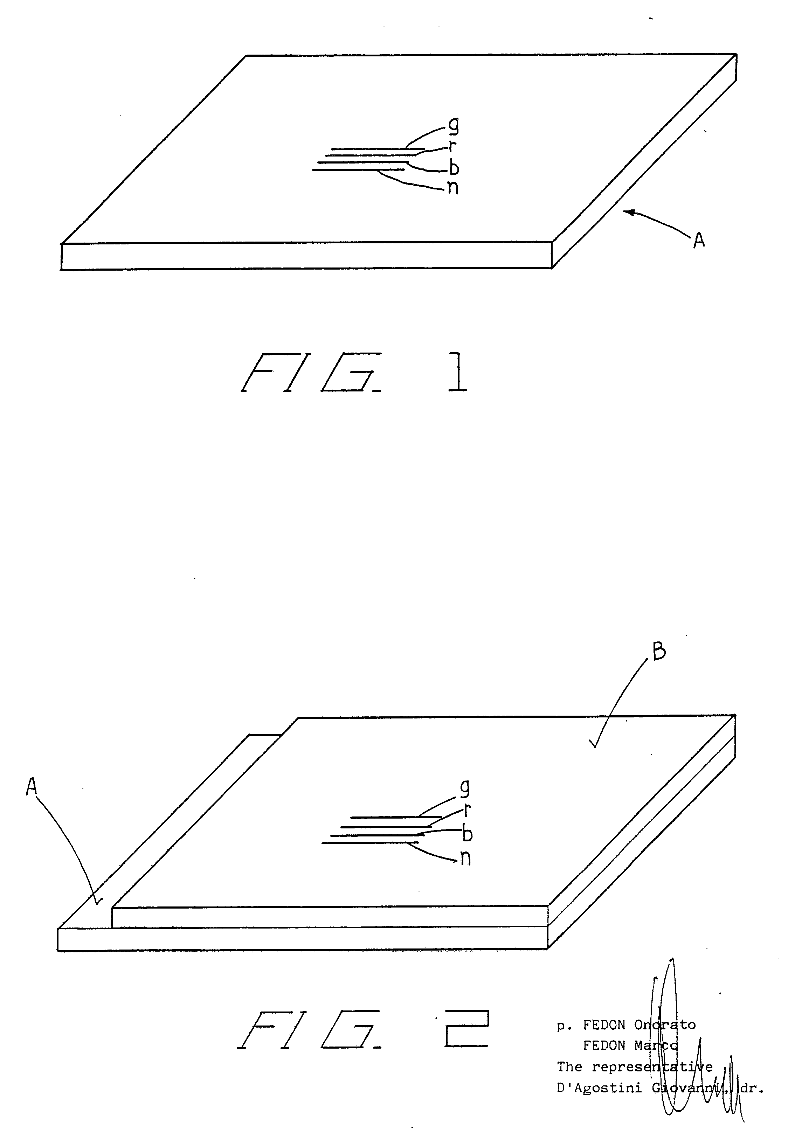

With reference to the above figures, a plastic plate (A) of the acetalic type, for the realization in particular of frames or complementary parts for glasses, is previously obtained with white base color.
Separately are prepared various base colors that successively must be utilized to paint/print in overlapping succession the surface of the plastic plate on a basis of a predetermined design, represented in the figure 1 schematically in this instance by four rectilinear lines: yellow (g), red (r), blue (b) and black (n), which are generally made up of dual-component pad-type ink for polychromy.

The process develops by means of the known photoengraving process, preparing at least one block (cliché) from a basic design to be transferred on plate A.

A relative block (cliché) corresponds to each color tone, one for yellow (g), one for red (r), one for blue (b) and one for black (n).

Then, in logical succession, the yellow ink (g) is spread first on the relative block (cliché) thus obtaining a stamp which is successively to print the design on the respective said plastic plate (A).

Alternatively can be utilized a matrix or a silicon pad for transfer of the respective designs.

An analogous procedure is carried out for each color, and therefore yellow (g) is followed respectively by red (r), blue (b) and by black (n).

Once the colors necessary to realize the design (g,r,b,n) are put on the plastic plate (A) a protective layer is given, e.g. a second layer of plastic transparent material (B) is glued over the printed surface where the design has been made.

Of course in place of layering as above an epoxide resin can be poured over it.

## Claims

1. A method to obtain graphic forms in various shades of color in particular on plastic plates successively worked to realizes frames and earpieces for glasses, utilizing a photo-engraving procedure to obtain at least one block/cliché for printing in said plastic plate, characterized by the fact that the method includes:
- preparation of the desired design;
- decomposition of the design by preparation of a number of different cliches or matrixes for said design, each one corresponding to a pre-established color of a set of colors previously determined (e.g. yellow, red, blue and black = four cliches),
- printing or transfer in logical succession of the respective decomposed designs in correspondent different colors by successive overprinting with said cliches/matrixes (g,r,b,n), over a surface of plastic plate as row material (A) to produce frames and/or earpieces for glasses/spectacles,
- covering the printed plastic plate (A) with a transparent layer of protective material (B);
- working in the final shapes the layered plastic plate to obtain spectacle-frames and/or spectacle-earpieces.

2. A method, as claimed in claim 1, wherein the respective utilized basic colors are yellow (g), red (r), blue (b) and black (n).

3. A method, as per the previous claims, characterized by the fact that as at least one color tone is paired with a different block, the yellow ink (g) is spread on the relative block thus obtaining a stamp which is successively taken from the same and transferred onto said plastic plate (A), and then an analogous procedure is respectively carried out with the colors red (r), blue (b) and black (n).

4. Method, as per b) is a plastic plate and/or claim 1, characterized by the fact that a layer of protective material (B) is also applied on the surface of said plastic plate (A) on which a design has been obtained.

5. Method, as per claims 1 and 4, characterized by the fact that the protective layer (B) is a plastic plate and/or a pouring of epoxide-type resin.

6. Method, as per claims 1 and 2, characterized by the fact that a silicone-type pad is the means of picking up the stamp from the block to be transferred to said plastic plate (A).

7. Method, as per claims 1 and 2, characterized by the fact that the basic color tones of yellow (g), red (r), blue (b) and black (n) are composed of dual-component, pad-type ink for polychromy.

FIG. 1

FIG. 2

p. FEDON Onorato
FEDON Marco
The representative
D'Agostini Giovanni, dr.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-1 047 413 (SALVAT EDITORES S.A.)<br>* Whole article *<br>--- | 1-4 | B 41 M 1/30<br>B 29 D 12/02 |
| Y | DE-A-2 333 752 (METZELER-PLASTIC GmbH)<br>* Claim 1; figure *<br>--- | 1-4 | |
| Y | DE-A-2 102 042 (VAW FOLIEN-VEREDELUNG GmbH)<br>* Figure 1 *<br>--- | 1-4 | |
| Y | EP-A-0 121 323 (COLOUR ACTIVATED TRANSILLUMINATION SYSTEMS LTD)<br>* Page 2, lines 4-14; page 3, lines 6-11 *<br>--- | 1-4 | |
| A | GB-A- 740 204 (LES FILS DE VICTOR MICHEL)<br>* Claims 1,2; page 1, lines 88-89 *<br>--- | 1 | |
| A | US-A-4 409 264 (K.B. GILLEO et al.)<br>* Claims 1,15 *<br>--- | 5 | TECHNICAL FIELDS SEARCHED (Int. Cl.4) |
| A | US-A-4 013 747 (G. HAMPEL)<br>--- | | B 41 M 1/00<br>B 29 D 12/00 |
| A | US-A-3 531 828 (J.P. NAUTA)<br>--- | | |
| A | DE-B-1 186 606 (PARMELEE PLASTICS CO.)<br>--- | | |
| A | FR-A-2 449 535 (P. WILFRIED)<br>* Page 1, lines 1-10 *<br>----- | 6 | |

The present search report has been drawn up for all claims

| Place of search | Date of completion of the search | Examiner |
|---|---|---|
| THE HAGUE | 26-07-1989 | DUPART J-M.B. |